# EUROPÄISCHE PATENTSCHRIFT

(11) **EP 1 371 535 B1**
(45) Veröffentlichungstag und Bekanntmachung des Hinweises auf die Patenterteilung: **25.01.2006**
(21) Anmeldenummer: 03007607.9
(22) Anmeldetag: 02.04.2003
(51) Int. Cl.: B60T 8/40, B60T 13/68

(54) **Hydraulische Kraftfahrzeugbremsanlage**
Hydraulic braking system for motor vehicles
Système de freinage hydraulique pour véhicules à moteur

(30) Priorität: 15.06.2002 DE 10226679
(43) Veröffentlichungstag der Anmeldung: 17.12.2003
(73) Patentinhaber: ROBERT BOSCH GMBH, 70442 Stuttgart (DE)
(72) Erfinder: Pahl, Arnold, 71706 Markgroeningen (DE); Blasenbrey, Michael, 71336 Waiblingen/Bittenfeld (DE)

(56) Entgegenhaltungen:
- WO-A-98/12086
- WO-A-02/064409
- DE-A- 19 543 582
- DE-C- 19 543 583
- US-B1- 6 267 456
- PATENT ABSTRACTS OF JAPAN vol. 2000, no. 10, 17. November 2000 (2000-11-17) -& JP 2000 185645 A (AISIN SEIKI CO LTD), 4. Juli 2000 (2000-07-04)
- PATENT ABSTRACTS OF JAPAN vol. 1998, no. 06, 30. April 1998 (1998-04-30) -& JP 10 044952 A (AISIN SEIKI CO LTD;TOYOTA MOTOR CORP), 17. Februar 1998 (1998-02-17)

## Beschreibung

### Stand der Technik

Die Erfindung geht von einer hydraulischen Kraftfahrzeugbremsanlage gemäß der im Oberbegriff des Patentanspruches 1 näher definierten Art aus.

Eine derartige Kraftfahrzeugbremsanlage ist beispielsweise bekannt aus der JP 2000 185 645 A. Diese bekannte Kraftfahrzeugbremsanlage weist eine durch Angriff an einem Bremspedal steuerbare fremdkraftbetätigte Betriebsbremse und eine muskelkraftbetriebene Hilfsbremse auf. Das Bremspedal steht in Wirkverbindung mit einem Hauptbremszylinder, der über ein Trennventil mit einem Bremskreis einer Radbremse verbunden ist. Zum Betrieb der fremdkraftbetätigten Betriebsbremse weist diese Kraftfahrzeugbremsanlage eine Hydropumpe auf, die Bremsflüssigkeit aus einem Vorratsbehälter ansaugt und in einen Hochdruck-Hydrospeicher fördert. Der Hochdruck-Hydrospeicher bildet zusammen mit der Hydropumpe eine Fremdenergiequelle, die mit der Radbremse in Verbindung steht. Der Radbremse ist eine Ventilanordnung zur Druckmodulation zugeordnet, so dass eine Bremskraftregelung bewirkt werden kann. Die Ventilanordnung umfasst ein Einlassventil, das mit der Fremdenergiequelle in Verbindung steht, und ein Auslassventil, das mit einem Vorratsbehälter in Verbindung steht.

Zur Einstellung des an der Radbremse wirkenden Bremsdrucks im fremdkraftbetätigten Betriebsmodus weist die Fahrzeugbremsanlage neben einem mit einer Steuereinheit verbundenen Pedalwegsensor einen Pedalwegsimulator auf. Dieser ist über einen Kanal mit dem Druckraum des Hauptbremszylinders verbunden und weist einen mittels einer Feder vorgespannten Simulatorkolben auf. Die von der Feder abgewandt liegende Stirnseite des Simulatorkolbens ist mit Fluiddruck aus dem Hauptbremszylinder beaufschlagt. Bei einer Betätigung der Bremsanlage mittels der Betriebsbremse, wird Bremsflüssigkeit aus dem Hauptbremszylinder in den Pedalwegsimulator eingefördert.

Eine die Feder aufnehmende Kammer des Pedalwegsimulators ist durch eine Druckmittelleitung an den Vorratsbehälter angeschlossen. Ein Trennventil dient der Steuerung dieser hydraulischen Verbindung. Im Falle eines Ausfalls der elektronischen Steuerung der Fahrzeugbremsanlage sperrt dieses Trennventil die hydraulische Verbindung zum Vorratsbehälter, so dass keine Bremsflüssigkeit von der Kammer zum Vorratsbehälter strömen kann. Das dann zwischen Pedalwegsimulator und Trennventil eingesperrte Druckmittelvolumen blockiert eine weitere Bewegung des Simulatorkolbens und verhindert somit den Eintrag von Druckmittel aus dem Hauptbremszylinder in den Pedalwegsimulator. Die gesamte im Hauptbremszylinder verdrängte Bremsflüssigkeit steht damit der Hilfsbremse zum Bremsdruckaufbau in der Radbremse zur Verfügung.

### Vorteile der Erfindung

Die hydraulische Kraftfahrzeugbremsanlage nach der Erfindung mit den Merkmalen nach dem Oberbegriff des Patentanspruches 1, hat demgegenüber den Vorteil, daß die Einrichtung zur hydraulischen Absperrung derart ausgelegt ist, daß durch eine geeignete Fluidzuführung an den Pedalwegsimulator zum Blockieren des Simulatorkolbens beide Stirnseiten desselben mit Fluiddruck beaufschlagt werden können.

In vorteilhafter Weise ist die Kraftfahrzeugbremsanlage nach der Erfindung derart geschaltet, daß im Back-up-Betriebsmodus, bei dem die Bremsanlage über den in dem Hauptbremszylinder aufgebauten Fluiddruck betätigt wird, der in dem Hauptbremszylinder herrschende Fluiddruck direkt an beiden Stirnseiten des Simulatorkolbens anliegt. Dies kann durch eine geeignete Trennventilschaltung erfolgen, und zwar derart, daß eine an eine zweite Stirnseite des Simulatorkolbens führende Fluidleitung über ein zweites Trennventil mit dem Hauptzylinderbremskreis verbunden ist. Bei Auslegung des Trennventils als 2/2-Ventil ist dieses vorzugsweise ein stromlos offenes Ventil.

Um im Normalbetriebsmodus der Kraftfahrzeugbremsanlage nach der Erfindung, d.h. im fremdkraftbetätigten Betriebsmodus, einen einwandfreien Betrieb des Pedalwegsimulators zu gewährleisten, ist dieser zweckmäßig mit einer Entlastungsleitung ausgebildet. Die Entlastungsleitung, die direkt von dem Pedalwegsimulator oder auch von der besagten Fluidleitung abzweigen kann, ist zweckmäßigerweise mit der Rücklaufleitung verbunden. Im Back-up-Betriebsmodus kann diese Leitung mittels eines dritten Trennventils gesperrt sein, so daß ein Druckabfall an der zweiten Stirnseite des Simulatorkolbens ausgeschlossen ist.

Bei einem Personenkraftwagen umfaßt die Bremsanlage üblicherweise zwei Bremskreise, von denen einer der Vorderachse und einer der Hinterachse zugeordnet ist. Der Hauptbremszylinder ist in diesem Falle bei einer zweckmäßigen Ausführungsform der Bremsanlage nach der Erfindung als Tandem-Hauptbremszylinder ausgebildet, der zwei Hauptzylinderräume aufweist, von denen einer mit dem der Vorderachse zugeordneten Bremskreis und der andere mit dem der Hinterachse zugeordneten Bremskreis in Verbindung steht. Im Normalbetriebsmodus sind die Hauptzylinderräume gegenüber den Bremskreisen bzw. Hauptzylinderbremskreisen jeweils mittels eines Trennventils abgesperrt.

Die einzelnen Ventile der Kraftfahrzeugbremsanlage nach der Erfindung sind auf vorteilhafte Weise derart geschaltet, daß sie sich stromlos in der Schaltstellung befinden, die zur Gewährleistung des Back-up-Betriebsmodus erforderlich ist.

Die einzelnen Trennventile können als elektromagnetisch betätigte oder auch als mechanisch betätigte Ventile ausgebildet sein und entweder in einem Hydroaggregat oder auch in einer Bremsbetätigungseinheit der Kraftfahrzeugbremsanlage angeordnet sein.

Zur Einsparung von Ventilen können das zweite Trennventil, mittels dessen die Fluidleitung zu dem Hauptzylinderbremskreis sperrbar ist, und das dritte Trennventil, das in der Entlastungsleitung angeordnet ist, in einem 3/2-Ventil zusammengefaßt sein. An dieses 3/2-Ventil sind dann die Fluidleitung, die Entlastungsleitung und eine zu einem Hauptzylinderraum und einem Hauptzylinderbremskreis zugeordneten Hauptzylinderraum führende Leitung angeschlossen. Bevorzugt sind in stromloser Schaltstellung die mit dem Hauptzylinderraum verbundene Leitung und die Fluidleitung miteinander verbunden und in bestromter Schaltstellung die Fluidleitung und die Entlastungsleitung miteinander verbunden.

Alternativ können das erste Trennventil, welches einem Hauptzylinderbremskreis zugeordnet ist, das zweite Trennventil und das dritte Trennventil in einem 4/2-Ventil zusammengefaßt sein. Zur Gewährleistung eines sicheren back-up-Betriebs der Bremsanlage ist das 4/2-Ventil bevorzugt so ausgelegt, daß in stromloser Schaltstellung eine mit einem Hauptzylinderraum verbundene Leitung einerseits mit einem Bremskreis und andererseits mit der zu dem Pedalwegsimulator führenden Fluidleitung verbunden ist, und dass in bestromter Schaltstellung die mit dem Hauptzylinderraum verbundene Leitung gesperrt und die Fluidleitung mit der Entlastungsleitung verbunden ist.

Weitere Vorteile und vorteilhafte Ausgestaltungen des Gegenstandes nach der Erfindung sind der Beschreibung, der Zeichnung und den Patentansprüchen entnehmbar.

### Zeichnung

Ausführungsbeispiele einer Kraftfahrzeugbremsanlage nach der Erfindung sind in der Zeichnung schematisch vereinfacht dargestellt und werden in der nachfolgenden Beschreibung näher erläutert. Es zeigen
Figur 1 ein Schaltbild einer ersten Ausführungsform einer Bremsanlage;
Figur 2 ein Schaltbild einer zweiten Ausführungsform einer erfindungsgemäßen Bremsanlage;
Figur 3 ein Schaltbild einer dritten Ausführungsform einer erfindungsgemäß ausgestalteten Bremsanlage.

### Beschreibung der Ausführungsbeispiele

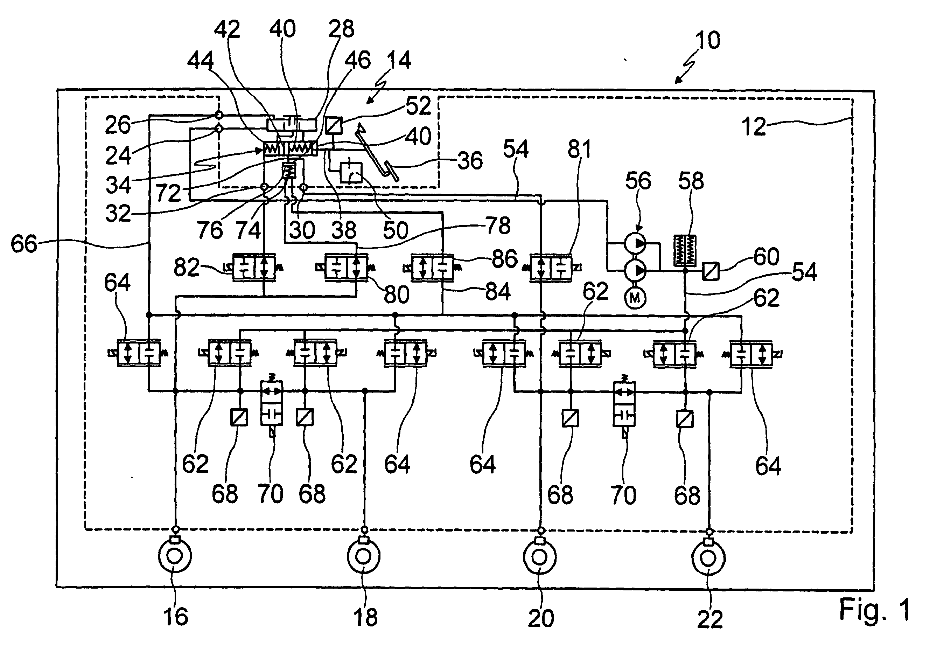

In Figur 1 ist eine hydraulische Bremsanlage 10 eines Personenkraftwagens dargestellt, die ein Hydroaggregat 12 aufweist, das einerseits mit einer Bremsbetätigungseinheit 14 und andererseits mit vier Radbremsen bzw. Radbremszylindern 16,18, 20 und 22 verbunden ist. Die Radbremse 16 bildet die an einem vorderen linken Rad angreifende Bremse, die Radbremse 18 die an einem vorderen rechten Rad angreifende Bremse, die Radbremse 20 die an einem hinteren linken Rad angreifende Bremse und die Radbremse 22 die an einem hinteren rechten Rad angreifende Bremse des Personenkraftwagens.

Das Hydroaggregat 12 steht über einen Sauganschluß 24 und einen Rücklaufanschluß 26 mit einem Druckmittel- bzw. Bremsflüssigkeitsvorratsbehälter 28 in Verbindung. Des weiteren steht das Hydroaggregat 12 über einen ersten Hauptzylinderkreisanschluß 30 und einen zweiten Hauptzylinderkreisanschluß 32 mit einem Tandem-Hauptbremszylinder 34 in Verbindung, welcher mittels eines Bremspedals 36 betätigbar ist.

Das Bremspedal 36 wirkt über einen Druckstangenkolben 38 auf einen ersten Hauptzylinderraum 40 sowie über einen an den ersten Hauptzylinderraum 40 grenzenden Zwischenkolben 42 auf einen zweiten Hauptzylinderraum 44. Der erste Hauptzylinderraum 40 ist dem ersten Hauptzylinderkreisanschluß 30 und der zweite Hauptzylinderraum 44 ist dem zweiten Hauptzylinderkreisanschluß 32 zugeordnet.

Des weiteren umfaßt die Bremsbetätigungseinheit 14 einen Pedalwegsimulator 46, einen Pedalwegsensor 48 und einen Bremslichtschalter 50.

Der Sauganschluß 24 des Hydroaggregats 12 steht mit einer ersten Leitung 54 des Hydroaggregats 12 in Verbindung, die zu einer Hochdruckpumpeneinheit 56 führt, welche zur Versorgung eines Druckmittelspeichers 58 dient. Der in dem Druckmittelspeicher 58 herrschende Druck ist mittels eines Drucksensors 60 meßbar. Stromab des Druckmittelspeichers 58 führt die Leitung 54 zu vier parallel angeordneten Einlaßventilen 62, die jeweils einem Radbremszylinder 16, 18, 20 bzw. 22 zugeordnet sind.

Des weiteren ist jeder Radbremse 16, 18, 20, 22 ein Auslaßventil 64 zugeordnet. Die mithin vier Auslaßventile 64 sind parallel angeordnet und mit einer zweiten Leitung 66 des Hydroaggregats 12 verbunden, die zu dem Rücklaufanschluß 26 und damit zu dem Bremsflüssigkeitsvorratsbehälter 28 führt.

Die Einlaßventile 62 und die Auslaßventile 64 sind jeweils einzeln ansteuerbar, so daß an jeder Radbremse 16, 18, 20, 22 ein spezifischer Bremsdruck auf- bzw. abgebaut werden kann. Der jeweilige Bremsdruck ist jeweils mittels eines Drucksensors 68 meßbar.

Zwischen der dem vorderen linken Rad zugeordneten Radbremse 16 und der dem vorderen rechten Rad zugeordneten Radbremse 18 sowie zwischen der dem hinteren linken Rad zugeordneten Radbremse 20 und der dem hinteren rechten Rad zugeordneten Radbremse 22 ist jeweils ein sogenanntes Balance-Ventil 70 angeordnet, mittels dessen bei einer Kurvenfahrt gezielt unterschiedliche Bremsdrücke an den einzelnen Rädern einer Achse einstellbar sind.

Der an den Radbremsen 16, 18, 20, 22 aufgebaute Bremsdruck ist abhängig von der von einem Fahrer auf das Bremspedal 36 ausgeübten Kraft, die von dem Pedalwegsensor 48 und dem Pedalwegsimulator 46 erfaßt und mittels einer hier nicht näher dargestellten Steuereinheit ausgewertet wird.

Der Pedalwegsimulator 46 ist über eine Leitung 72 mit dem ersten Hauptzylinderraum 40 verbunden und weist einen Simulatorkolben 76 auf, der mittels einer Feder 74 in Richtung des Hauptzylinders 34 vorgespannt ist. An einer dem ersten Hauptzylinderraum 40 zugewandten Stirnseite des Simulatorkolbens 76 liegt der in dem Hauptzylinderraum 40 herrschende Druck an, welchem im Normalbetrieb der Bremsanlage 10 nur die Federkraft der Feder 74 entgegenwirkt.

Der Pedalwegsimulator 46 ist des weiteren mit einer Fluidleitung 78 verbunden, die über ein stromlos offenes Trennventil 80 mit dem der Vorderachse des Personenkraftwagens zugeordneten Bremskreis verbunden ist. Dieser Bremskreis bzw. Hauptzylinderkreis ist dem zweiten Hauptzylinderraum 44 zugeordnet, der über ein ebenfalls stromlos offenes Trennventil 82 mit den Radbremsen 16 und 18 der Vorderachse des Personenkraftwagens verbunden ist.

Des weiteren zweigt von dem Pedalwegsimulator 46 eine Entlastungsleitung 84 ab, die über ein stromlos geschlossenes Trennventil 86 mit der zu dem Vorratsbehälter 28 führenden Rücklaufleitung 66 verbunden ist.

Der erste Hauptzylinderkreis bzw. der erste Hauptzylinderraum 40 des Hauptbremszylinders 34 ist über ein Trennventil 81 mit den der Hinterachse des Personenkraftwagens zugeordneten Radbremsen 20 und 22 verbunden. Das Trennventil 81 ist als stromlos offenes Magnetventil ausgebildet.

Im Normalbetrieb der elektrohydraulischen Bremsanlage 10, d.h. bei fremdkraftbetätigter Regelung des Bremsdrucks mittels des Druckspeichers 58 und der Einlaßventile 62 und der Auslaßventile 64, sind die Trennventile 81, 82 und 80 bestromt und damit in Schließstellung. Das Trennventil 86 ist ebenfalls bestromt, so daß es sich in Öffnungsstellung befindet und der Pedalwegsimulator 76 über die Entlastungsleitung 84 und die Rücklaufleitung 66 hydraulisch entlastet ist. Dieser Schaltzustand der Trennventile 80, 81, 82 und 86 wird im Normalbetrieb bei Betätigung des Bremspedals 36 hergestellt.

Wird die Bremsanlage 10 muskelkraftbetätigt, d. h. im sogenannten Back-up-Betriebsmodus betrieben, sind die zu den beiden Bremskreisen führenden Trennventile 81 und 82 sowie das in der Fluidleitung 78 angeordnete Trennventil 80 stromlos geöffnet. Hingegen ist das in der Entlastungsleitung 84 angeordnete Trennventil 86 stromlos geschlossen. In diesem Falle wirkt der in dem zweiten Hauptzylinderraum 44 aufgebaute Druck über den Hauptzylinderkreisanschluß 32, das geöffnete Trennventil 82, das geöffnete Trennventil 80 und die Fluidleitung 78 in den Pedalwegsimulator 46. Dadurch liegt an beiden Stirnflächen des Simulatorkolbens 76 der gleiche Fluiddruck an. Zusätzlich wirkt von der dem Tandem-Hauptbremszylinder 34 abgewandten Seite die Federkraft der Feder 74 auf den Simulatorkolben 76, so daß dieser in eine Anschlagstellung gebracht und blockiert ist.

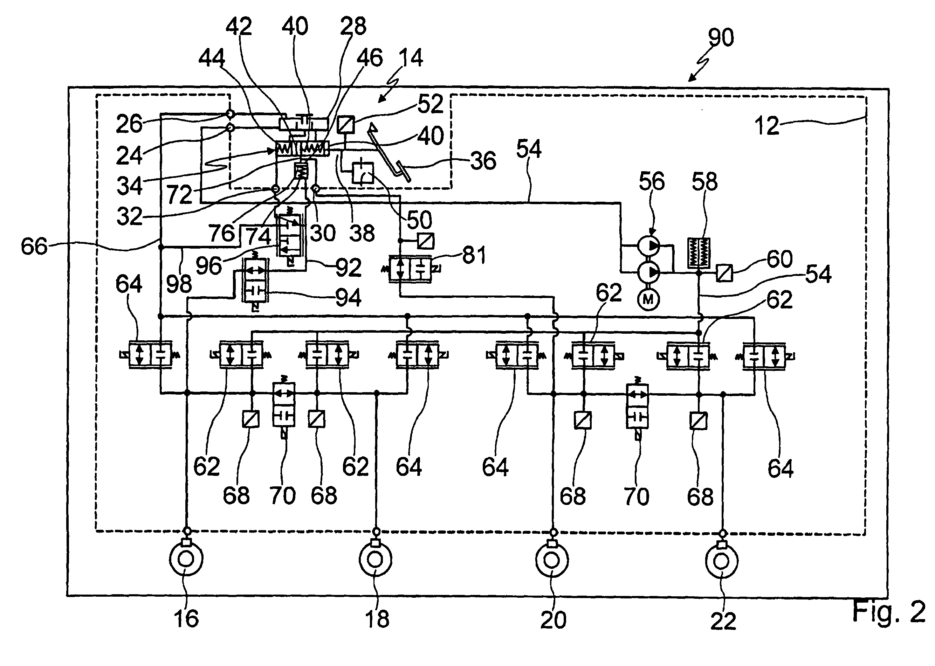

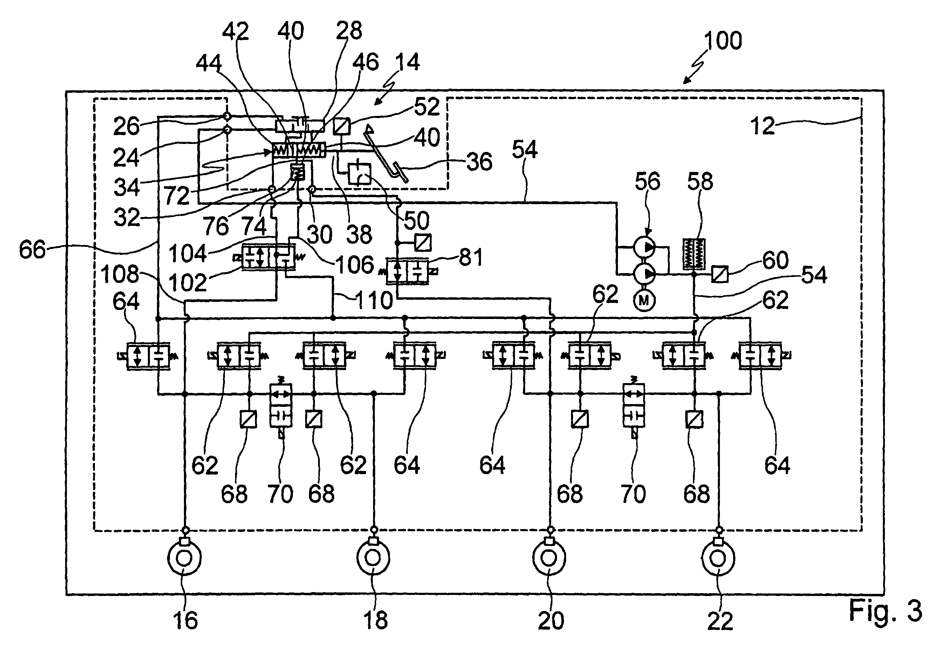

In den Figuren 2 und 3 sind alternative Ausführungen einer hydraulischen Kraftfahrzeugbremsanlage dargestellt, die im wesentlichen derjenigen nach Figur 1 entsprechen, weshalb für funktionsgleiche Bauelemente die gleichen Bezugszeichen wie in Figur 1 verwendet werden.

Die Figur 2 zeigt eine Kraftfahrzeugbremsanlage 90, die sich von der Ausführung nach Figur 1 hinsichtlich der hydraulischen Absperrung des Pedalwegsimulators 34 bzw. des Simulatorkolbens 76 unterscheidet.

Der Pedalwegsimulator 34 ist bei dem Ausführungsbeispiel nach Figur 2 mit einer Fluidleitung 92 verbunden, die einerseits zu einem stromlos offenen Trennventil 94 und andererseits zu einem als 3/2-Ventil ausgebildeten Trennventil 96 führt, das des weiteren mit einer zu dem zweiten Hauptzylinderraum 44 führenden Hauptzylinderleitung und mit einer als Entlastungsleitung für den Pedalwegsimulator dienenden Leitung 98 verbunden ist. Die Entlastungsleitung 98 führt zu der zweiten Leitung bzw. Rücklaufleitung 66.

In stromloser Schaltstellung des Trennventils 96, die im Back-up-Betriebsmodus der Bremsanlage 90 vorliegt, ist das Trennventil 96 derart geschaltet, daß der zweite Hauptzylinderraum 44 mit der Fluidleitung 92 und damit zum einen über das Trennventil 94 mit dem der Vorderachse des betreffenden Kraftfahrzeuges zugeordneten Bremskreis und andererseits mit dem Pedalwegsimulator 46 verbunden ist, so daß der Simulatorkolben 76 entsprechend der Ausführungsform nach Figur 1 durch den in dem Hauptzylinderraum 44 aufgebauten Druck gesperrt ist und kein Totvolumen aus dem Hauptzylinderraum 40 in den Pedalwegsimulator 46 eingefördert werden kann.

Gegenüber der Bremsanlage nach Figur 1 kann bei der hydraulischen Bremsanlage 90 zur hydraulischen Absperrung des Pedalwegsimulators 46 ein Trennventil eingespart werden, da das Trennventil 96 die Funktion zweier Trennventile übernimmt, nämlich in einer Schaltstellung die Absperrung der Entlastungsleitung 98 und in der anderen Schaltstellung die Absperrung der mit dem Hauptzylinderraum 44 verbundenen Leitung gegenüber der Fluidleitung 92.

In Figur 3 ist eine weitere Ausführungsform einer hydraulischen Bremsanlage 100 dargestellt, die sich von der Bremsanlage nach Figur 1 wiederum durch die Ventilschaltung zur hydraulischen Absperrung des Pedalwegsimulators 46 unterscheidet.

Der für den Back-up-Betriebsmodus erforderliche Schaltzustand zur hydraulischen Absperrung des Pedalwegsimulators 46 wird mittels eines als 4/2-Ventil ausgebildeten Trennventils 102 erreicht, das mit einer zu dem Hauptzylinderraum 44 führenden Leitung 104, einer zu dem Pedalwegsimulator 44 führenden Fluidleitung 106, einer zu dem der Vorderachse des Kraftfahrzeuges zugeordneten Bremskreis führenden Bremsleitung 108 und einer zu der Rücklaufleitung 66 führenden Entlastungsleitung 110 verbunden ist.

In der in Figur 3 dargestellten, stromlosen Schaltstellung ist das Ventil 102 derart geschaltet, daß die Leitung 104 zum einen mit der zu dem Pedalwegsimulator 46 führenden Fluidleitung 106 und zum anderen mit der Bremsleitung 108 verbunden ist, so daß der in dem Hauptzylinderraum 44 aufgebaute Fluiddruck zum einen in den der Vorderachse zugeordneten Bremskreis und zum anderen in den Pedalwegsimulator 34 wirkt und der Simulatorkolben 76 entsprechend der Ausführungsform nach Figur 1 gesperrt ist.

Im Normalbetrieb des Bremsanlage 100, d.h. bei einer fremdkraftbetätigten Regelung und bestromter Schaltstellung des Ventils 102, ist das 4/2-Ventil 102 so geschaltet, daß die Leitung 104 gegenüber der Bremsleitung 108 gesperrt ist und daß die Fluidleitung 106 mit der Entlastungsleitung 110 verbunden ist.

## Patentansprüche

1. Hydraulische Kraftfahrzeugbremsanlage, mit einer fremdkraftbetätigten Betriebsbremse und einer muskelkraftbetätigten Hilfsbremse, mit einem mittels eines Bremspedals (36) betätigbaren Hauptbremszylinder (34), der mit einem ersten Häuptzylinderbremskreis über ein erstes Trennventil (82; 94, 96; 102) sowie mit einem Pedalwegsimulator (46) verbunden ist, der einen Simulatorkolben (76) umfasst, der zumindest in einem fremdkraftbetätigten Betriebsmodus an einer ersten, Stirnseite über den Hauptbremszylinder (34) mit Bremsdruck beaufschlagt ist; mit einer einen Druckmittelvorratsbehälter (28) mit mindestens einer Radbremse (16, 18, 20, 22) des Bremskreises verbindenden Versorgungsleitung (54), an welche eine Hochdruckquelle (56, 58) angeschlossen ist, und einer Rücklaufleitung (66); mit einer Ventilanordnung zur Druckmodulation in der Radbremse (16, 18, 20,22), umfassend ein mit der Versorgungsleitung (54) verbundenes Einlassventil (62) und ein mit der Rücklaufleitung (66) verbundenes Auslassventil (64); mit einer Steuereinheit, und mit
einer mittels der Steuereinheit angesteuerten Einrichtung zur hydraulischen Absperrung des Pedalwegsimulators (46), wobei die Einrichtung zur hydraulischen Absperrung derart ausgebildet ist, dass der Pedalwegsimulator (46) zur Druckbeaufschlagung der zweiten Stirnseite des Simulatorkolbens (76) mit mindestens einer Fluidleitung (78, 92, 106) verbunden ist, **dadurch gekennzeichnet, dass** die Fluidleitung (78, 92, 106) über ein zweites Trennventil (80; 94, 96; 102) mit einem zweiten Hauptzylinderbremskreis verbunden ist.

2. Hydraulische Kraftfahrzeugbremsanlage nach Anspruch 1, **gekennzeichnet durch** eine Entlastungsleitung (84, 98, 110) für den Pedalwegsimulator (46).

3. Hydraulische Kraftfahrzeugbremsanlage nach Anspruch 1 oder 2, **dadurch gekennzeichnet, dass** in der Entlastungsleitung (84, 98, 110) ein drittes Trennventil (86, 96, 102) angeordnet ist.

4. Hydraulische Kraftfahrzeugbremsanlage nach Anspruch 2 oder 3, **dadurch gekennzeichnet, dass** die Entlastungsleitung (84, 98, 110) mit der Rücklaufleitung (66) verbunden ist.

5. Hydraulische Kraftfahrzeugbremsanlage nach Anspruch 1, **dadurch gekennzeichnet, dass** das zweite Trennventil ein vorzugsweise stromlos offenes 2/2-Ventil (80) ist.

6. Hydraulische Kraftfahrzeugbremsanlage nach Anspruch 3, **dadurch gekennzeichnet, dass** das dritte Trennventil ein vorzugsweise stromlos geschlossenes 2/2-Ventil (86) ist.

7. Hydraulische Kraftfahrzeugbremsanlage nach Anspruch 3 in Verbindung mit Anspruch 1, **dadurch gekennzeichnet, dass** das zweite Trennventil und das dritte Trennventil zu einem 3/2-Ventil (96) zusammengefasst sind.

8. Hydraulische Kraftfahrzeugbremsanlage nach Anspruch 3 in Verbindung mit Anspruch 1, **dadurch gekennzeichnet, dass** das erste Trennventil, das zweite Trennventil und das dritte Trennventil zu einem 4/2-Ventil (102) zusammengefasst sind.

## Claims

1. Hydraulic motor-vehicle braking system, having a service brake which is actuated by an external force and an auxiliary brake which is actuated by muscular force, having a brake master cylinder (34) which can be actuated by means of a brake pedal (36) and is connected to a master-cylinder brake circuit via a first separating valve (82; 94, 96; 102) and to a pedal travel simulator (46) which comprises a simulator piston (76) which has brake pressure applied to its first end side via the brake master cylinder (34), at least in an operating mode which is actuated by an external force; having a supply line (54) which connects a pressure-medium reservoir (28) to at least one wheel brake (16, 18, 20, 22) of the brake circuit and to which a high-pressure source (56, 58) is connected, and having a return line (66); having a valve arrangement for pressure modulation in the wheel brake (16, 18, 20, 22), comprising an inlet valve (62) which is connected to the supply line (54) and an outlet valve (64) which is connected to the return line (66); having a control unit, and having a device, which can be actuated by means of the control unit, for hydraulically shutting off the pedal travel simulator (46), the device for the hydraulic shutting-off being configured in such a way that, in order to apply pressure to the second end side of the simulator piston (76), the pedal travel simulator (46) is connected to at least one fluid line (78, 92, 106), **characterized in that** the fluid line (78, 92, 106) is connected to a second master-cylinder brake circuit via a second separating valve (80; 94, 96; 102).

2. Hydraulic motor-vehicle braking system according to Claim 1, **characterized by** a relief line (84, 98, 110) for the pedal travel simulator (46).

3. Hydraulic motor-vehicle braking system according to Claim 1 or 2, **characterized in that** a third separating valve (86, 96, 102) is arranged in the relief line (84, 98, 110).

4. Hydraulic motor-vehicle braking system according to Claim 2 or 3, **characterized in that** the relief line (84, 98, 110) is connected to the return line (66).

5. Hydraulic motor-vehicle braking system according to Claim 1, **characterized in that** the second separating valve is a 2/2-way valve (80) which is preferably open in the currentless state.

6. Hydraulic motor-vehicle braking system according to Claim 3, **characterized in that** the third separating valve is a 2/2-way valve (86) which is preferably closed in the currentless state.

7. Hydraulic motor-vehicle braking system according to Claim 3 in conjunction with Claim 1, **characterized in that** the second separating valve and the third separating valve are combined to form a 3/2-way valve (96).

8. Hydraulic motor-vehicle braking system according to Claim 3 in conjunction with Claim 1, **characterized in that** the first separating valve, the second separating valve and the third separating valve are combined to form a 4/2-way valve (102).

## Revendications

1. Système de freinage hydraulique de véhicule automobile comportant un frein de fonctionnement actionné par une force extérieure et un frein auxiliaire actionné par la force musculaire, comprenant :
- un maître cylindre (34) commandé par une pédale de frein (36), relié à un premier circuit de freinage de maître cylindre par une première vanne de coupure (82 ; 84, 96 ; 102) ainsi qu'un simulateur de course de pédale (46) comprenant un piston simulateur (76) sollicité par la pression de frein au moins dans un mode de fonctionnement avec commande par une force extérieure, sur la première face frontale par l'intermédiaire du maître cylindre (34),
- une conduite d'alimentation (54) raccordée à une source de haute pression (56, 58) et reliant un réservoir de liquide de frein (28) à au moins un frein de roue (16, 18, 20, 22) du circuit de frein, une conduite de retour (66),
- un dispositif à vannes pour moduler la pression des freins de roue (16, 18, 20, 22) comprenant une vanne d'admission (62) reliée à la conduite d'alimentation (54) et une vanne d'échappement (64) reliée à la conduite de retour (66),
- une unité de commande et une installation commandée par l'unité de commande pour couper hydrauliquement le simulateur de course de pédale (46),
l'installation de coupure hydraulique étant réalisée de façon que le simulateur de course de pédale (46) soit relié à au moins une conduite de fluide (78, 92, 106) pour appliquer la pression à la seconde face frontale du piston de simulateur (76),
**caractérisé en ce que**
la conduite de fluide (78, 92, 106) est reliée par une seconde vanne de coupure (80, 94, 96, 102) à un second circuit du maître cylindre.

2. Système de freinage hydraulique de véhicule automobile selon la revendication 1,
**caractérisé par**
une conduite de décharge (84, 98, 110) du simulateur de course de pédale (46).

3. Système de freinage hydraulique de véhicule automobile selon la revendication 1 ou 2,
**caractérisé par**
une troisième vanne de coupure (86, 96, 102) dans la conduite de décharge (84, 98, 110).

4. Système de freinage hydraulique de véhicule automobile selon la revendication 2 ou 3,
**caractérisé en ce que**
la conduite de décharge (84, 98, 110) est reliée à la conduite de retour (66).

5. Système de freinage hydraulique de véhicule automobile selon la revendication 1,
**caractérisé en ce que**
la seconde vanne de coupure est notamment une vanne à 2/2 voies (80) s'ouvrant en l'absence de courant.

6. Système de freinage hydraulique de véhicule automobile selon la revendication 3,
**caractérisé en ce que**
la troisième vanne de coupure est de préférence une vanne à 2/2 voies (86) fermée en l'absence de courant.

7. Système de freinage hydraulique de véhicule automobile selon la revendication 3 combinée à la revendication 1,
**caractérisé en ce que**
la seconde vanne de coupure et la troisième vanne de coupure sont réunies pour former une vanne à 3/2 voies (96).

8. Système de freinage hydraulique de véhicule automobile selon la revendication 3 combinée à la revendication 1,
**caractérisé en ce que**
la première vanne de coupure, la seconde vanne de coupure et la troisième vanne de coupure sont réunies pour former une vanne à 4/2 voies (102).
